# EUROPÄISCHE PATENTSCHRIFT

(11) **EP 2 855 268 B1**
(45) Veröffentlichungstag und Bekanntmachung des Hinweises auf die Patenterteilung: **10.08.2022**
(21) Anmeldenummer: 13725079.1
(22) Anmeldetag: 24.05.2013
(51) Int. Cl.: B64D 11/06, B60N 2/42, B60N 2/427

(54) **FLUGZEUGSITZ MIT EINER SITZBAUGRUPPE**
AIRCRAFT SEAT COMPRISING A SEAT ASSEMBLY
SIÈGE D'AVION POURVU D'UN ENSEMBLE SIÈGE

(30) Priorität: 24.05.2012 DE 102012208721
(43) Veröffentlichungstag der Anmeldung: 08.04.2015
(73) Patentinhaber: Lufthansa Technik AG, 22335 Hamburg (DE)
(72) Erfinder: THOMASCHEWSKI, Oliver, 22846 Norderstedt (DE)
(74) Vertreter: Müller Verweyen
(86) Internationale Anmeldenummer: PCT/EP2013/001530
(87) Internationale Veröffentlichungsnummer: WO 2013/174520

(56) Entgegenhaltungen:
- EP-A1- 2 305 561
- EP-A2- 1 598 270
- WO-A1-01/12464
- WO-A1-2010/041235
- WO-A1-2011/073315
- WO-A2-2006/124555
- DE-U1-202005 012 230
- US-A- 2 346 895
- US-A- 5 657 950

## Beschreibung

Die Erfindung betrifft einen Flugzeugsitz gemäß Anspruch 1. Für einen möglichen Crashfall eines Flugzeugs bestehen luftfahrtrechtliche Anforderungen, wonach eine dynamische Insassenbelastung unter definierten Bedingungen nicht überschritten werden darf. Hierfür ist es notwendig, dass der Flugzeugsitz eine Möglichkeit bietet, die auf den Passagier einwirkenden Kräfte, resultierend aus den auftretenden Beschleunigungen, in einem Crashfall durch eine Aufnahme kinetischer Energie zu begrenzen.

Aus dem Stand der Technik sind Sitzunterbauten von Flugzeugsitzen bekannt, die ein metallisches Gestell als kraftübertragendes Element aufweisen. In der Regel weist das Gestell eine Fachwerkstruktur auf. Als Material wird typischerweise eine Aluminiumlegierung verwendet. Die Steifigkeit des Sitzunterbaus wird konstruktiv so ausgelegt, dass die auf den sitzenden Passagier auftretenden Kräfte in einem Crashfall durch die Verformung des Sitzunterbaus begrenzt werden.

Die plastische Verformung erfolgt über den ganzen Sitzunterbau verteilt. Bei translatorischen Beschleunigungen bzw. den resultierenden Kräften in einem entsprechenden Crashfall stellt sich eine Rotationsbewegung des Flugzeugsitzes um einen virtuellen Drehpunkt, der relativ zur Sitzfläche des Flugzeugsitzes tief in Richtung der Bodenebene liegt, ein. Dies führt im oberen Bereich des Sitzes zu einer übermäßigen translatorischen Verschiebung und somit zu einer großen Bewegungsenveloppe, die als Bewegungsraum von weiteren Bauteilen freigehalten werden muss, um Kollisionen mit möglichen Verletzungsfolgen für den Passagier zu verhindern.

Alternativ besteht die Möglichkeit, den Freiraum um den Passagier so klein zu halten, dass der zurückgelegte Weg beispielsweise des Kopfes im Crashfall so kurz ist, dass dieser bis zum Auftreffen auf einem festinstallierten Teil in der Bewegungsenveloppe, zum Beispiel Stuhl oder Tisch, noch keine kritische Energie aufgebaut hat, die zu Verletzungen führt. Hieraus ergibt sich entweder beispielsweise eine enge Bestuhlung oder ein sehr großer Freiraum. Beide Varianten sind nachteilig, weil sie zu Einbußen im Komfort oder zu einem hohen Platzbedarf in der räumlich begrenzten Kabine führen. Weiterhin stellt sich eine Polsterung aller vorhandenen Teile in der Bewegungsenveloppe als unpraktikabel dar.

Aus der DE 20 2005 012 230 U1 ist eine Dämpfvorrichtung für Passagiersitze mit einem Schnapperstift bekannt. Eine Grundlage des Sitzes ist hier nicht unmittelbar mit einem Fahrzeuggehäuse verbunden, sondern über eine Gleitschiene befestigt, so dass der Sitz sich in einer Vorwärtsbewegung gegen die Kraft einer Feder bewegen kann. Der Schnapperstift dient dazu, eine Rückwärtsbewegung des Sitzes, wenn dieser durch eine Extrembremsung gegen die Kraft der Feder nach vorne gedrückt wurde, zu verhindern.

Die EP 2 305 561 A1 offenbart einen Sitz für ein motorisiertes Fluggerät, wobei Stützen vorgesehen sind, die mit einem Schalensitz verbunden sind. Die Verbindung zwischen der Sitzschale und den Trägern ist dabei so ausgeführt, dass eine geometrische Kompensation von Deformationsbewegungen des Bodens, die auf die Stützen einwirken, erfolgen kann.

Die WO 2010/041235 A1 zeigt eine Energieabsorptionseinrichtung, die durch eine plastische Deformation die auf einen Insassen wirkenden Beschleunigungen reduzieren kann.

Die WO 2011/073315 A1 offenbart eine Energieabsorptionsvorrichtung für Strukturelemente in einem Faserverbundwerkstoff. Bei dieser Lösung sind zwei Teile aus Faserverbundwerkstoff in einem Verbindungsbereich unelastisch miteinander verbunden, wobei die zwei Teile derart über Fasern miteinander verbunden, so dass eine zu große Beanspruchung des Strukturelements eine Delamination der Fasern zur Folge hat und damit Energie absorbiert wird.

Weiter ist aus der US 5,657,950 A eine Sitzstruktur bekannt, die sich im Falle einer zu großen Beanspruchung so deformieren kann, dass sich eine spezielle Zurücklehnbewegung ergibt. Das wird durch ein Einknicken der unteren Sitzstruktur erreicht. Der Sitz vollzieht dadurch bei einer entsprechenden Beanspruchung eine vordefinierte Bewegungsenveloppe, so dass der Passagier vor einer Kollision mit anderen Objekten geschützt werden kann.

Die WO 2006/124555 A2 zeigt eine energieabsorbierende Befestigungseinrichtung, die unmittelbar an der flugzeugfesten Sitzschiene angeordnet ist. Dabei ist der Sitz an zwei hinteren Stellen über eine Baugruppe befestigt, die in einem Crashfall eine Rotationsbewegung im Bereich der Sitzschiene ermöglicht. Im vorderen Bereich erfolgt die Befestigung an der Sitzschiene über Bolzen, der über eine Bolzenbaugruppe an dem Sitz befestigt ist. Diese Bolzenbaugruppe ist dazu eingerichtet, bei Überschreitung einer auf den Bolzen wirkenden Zugkraft, den Bolzen unter Energiedissipation in eine Längsrichtung freizugeben.

Aus der EP 1 598 270 A2 ist ein Fluggastsitz mit integriertem Rückstellelement bekannt, wobei zumindest ein Sitzelement und ein Rückenelement des Fluggastsitzes schwenkbar sind. Zur Verstellung des Rückenelements und des Sitzelements wirkt ein Rückstellelement, wobei die Kraftübertragung von dem Rückstellelement auf das Rückenelement bzw. das Sitzelement auch über ein Wippenelement erfolgen kann.

Die US 2,346,895 offenbart einen Fahrzeugsitz, welcher im Falle eines Unfalls vorwärts gegen eine schockabsorbierende Feder rutschen kann. Dies führt zu einer allmählichen Verlangsamung des Insassen und schützt ihn vor Verletzungen durch eine plötzliche Verzögerung.

Die Aufgabe der Erfindung ist es, einen Flugzeugsitz anzugeben, der eine definierte und kleine Bewegungsenveloppe in einem Crashfall aufweist.

Die Aufgabe der Erfindung wird ausgehend von dem Oberbegriff des Anspruchs 1 mit dessen kennzeichnenden Merkmalen gelöst. Es wird ein Flugzeugsitz mit einer Sitzbaugruppe vorgeschlagen, wobei die Sitzbaugruppe einen Sitzunterbau, eine Sitzbasis und eine Sitzflächenbaugruppe umfasst. Erfindungsgemäß weist der Flugzeugsitz eine Wippbarkeit zwischen der Sitzbasis und/oder dem Sitzunterbau und wenigstens Teilen der Sitzflächenbaugruppe um eine Querachse auf. Es ist ferner eine Kraftbegrenzungsvorrichtung vorgesehen, welche bei einer Aktivierung durch ein Überschreiten einer Kraftgrenze eine kraftbegrenzte Wippbewegung der Sitzflächenbaugruppe ermöglicht. Weiter ist der obere Teil der Sitzflächenbaugruppe gegenüber dem Sitzunterbau und/oder der Sitzbasis durch ein Wippengelenk wippbar. Die Wippbarkeit der Sitzflächenbaugruppe kann durch ein Blockadeelement blockiert werden, und in diesem blockierten Zustand erfolgt die kraftbegrenzte Wippbewegung unter dauerhafter Energieaufnahme der Kraftbegrenzungsvorrichtung. Bei einer Aktivierung der Kraftbegrenzungsvorrichtung durch Überschreiten von definierten Kräften, insbesondere in einem Crashfall, erlaubt die kraftbegrenzte Wippbarkeit eine Rotationsbewegung, die unter Energievernichtung erfolgt. Dadurch werden die auf den Passagier und die Struktur des Flugzeugsitzes einwirkenden Lasten begrenzt, was sich zu Gunsten der Sicherheit des Passagiers und zu Gunsten eines reduzierten Strukturgewichts des Flugzeugsitzes auswirken kann. Die Wippbewegung der Sitzflächenbaugruppe gegenüber der Sitzbasis kann daher in möglichen Ausführungsformen auch nur im Crashfall, d.h. bei hohen Lasten bzw. Kräften, ermöglicht werden. Die kraftbegrenzte Rotation erfolgt definiert um den Drehpunkt der Wippbarkeit. Dieser Drehpunkt ist im Bereich der Sitzflächenbaugruppe und daher vergleichsweise hoch über der Bodenebene, so dass die sich ergebende Bewegungsenveloppe klein bleibt.

Die Wippbarkeit der Sitzflächenbaugruppe kann durch ein Blockadeelement blockiert werden. Die Aktivierung der Kraftbegrenzungsvorrichtung kann erfolgen, wenn die Wippbarkeit der Sitzflächenbaugruppe durch das Blockadeelement blockiert ist. Die Wippbewegung ist in einer bevorzugten Ausführungsform in einer nicht blockierten Stellung federbelastet, so dass die Wippbewegung in diesem Zustand durch die Gewichtsverlagerung eines Sitzenden hervorgerufen werden kann. In diesem Zustand ist eine Wippbewegung möglich, welche die Kraftbegrenzungsvorrichtung nicht aktiviert. In einem blockierten Zustand ist nur eine kraftbegrenzte Wippbewegung unter dauerhafter Energieaufnahme der Kraftbegrenzungsvorrichtung möglich.

Vorzugsweise ist das Blockadeelement Teil der Kraftbegrenzungsvorrichtung. Dies ermöglicht eine leichte und integrierte Bauweise, die insgesamt eine geringe Teileanzahl und einen leichten Flugzeugsitz ermöglicht. Die Kraftbegrenzungsvorrichtung liegt daher automatisch im Lastpfad, sobald die Wippbarkeit des Flugzeugsitzes blockiert wird. Allgemein wird davon ausgegangen, dass der Flugzeugsitz in einem Crashfall immer im Zustand einer blockierten Wippbarkeit bzw. Beweglichkeit ist. Dies wird durch entsprechende Sicherheitsvorschriften bzw. Sicherheitsanweisungen und -verfahren in kritischen Flugphasen, wie beispielsweise Start oder Landung, erreicht.

In möglichen Ausführungsformen kann die Kraftbegrenzungsvorrichtung beispielsweise eine metallische Struktur sein, welche im Lastpfad zwischen der Sitzbasis und der Sitzflächenbaugruppe angeordnet ist. Bei einer Aktivierung einer derartigen Kraftbegrenzungsvorrichtung wird die metallische Struktur unter kontinuierlicher Energieaufnahme und Kraftbegrenzung verformt. Auf diese Weise wird eine Wippbewegung der Sitzflächenbaugruppe um eine Querachse erreicht. In dieser Ausführungsform ist die Verformung der Kraftbegrenzungsvorrichtung irreversibel.

In einer vorteilhaften Ausführungsform weist die Sitzflächenbaugruppe gegenüber der Sitzbasis eine Verschiebbarkeit in mindestens eine translatorische Richtung im Wesentlichen parallel zu einem Kabinenboden auf. Auf diese Weise kann der Flugzeugsitz, beispielsweise vor einem Tisch, das Aufstehen für den Passagier erleichtern. Im Wesentlichen parallel bezieht sich beispielsweise auch auf einen Ausgleich eines typischen Anstellwinkels des Flugzeugs, so dass sich eine Abweichung der Parallelität von der Richtung der Verschiebbarkeit der Bodenebene der Flugzeugkabine von bis zu 10° ergeben kann.

In einer bevorzugten Ausführungsform ermöglicht das Wippengelenk eine zusätzliche Verschiebung der Sitzflächenbaugruppe parallel zu einer Querachse. Das Wippengelenk weist hierfür eine Führung auf, die in vorteilhafter Weise genutzt werden kann, um eine geführte seitliche Verschiebung der Teile zueinander zu ermöglichen. Eine seitliche Verschiebung kann hierdurch mit einer geringen Bauhöhe der Sitzflächenbaugruppe erreicht werden.

Vorzugsweise ist an der Sitzbaugruppe eine einstellbare Lehnenbaugruppe angeordnet. Eine einstellbare Lehnenbaugruppe weist einen im Wesentlichen fixierten Winkel zu einer Sitzflächenbaugruppe auf, der durch den Passagier in einer Mehrzahl von Winkelstellungen eingestellt werden kann. Während des Einstellvorgangs hebt der Passagier die Fixierung des Winkels durch ein entsprechendes Betätigungselement zeitweilig auf. Weiterhin ist in einer bevorzugten Ausführungsform die Relativbewegung von Teilen des Flugzeugsitzes in einer definierten Standardstellung blockierbar. Die Relativbewegung von Teilen des Flugzeugsitzes können unter anderem die Wippbarkeit zwischen der Sitzbasis und dem oberen Teil der Sitzflächenbaugruppe, eine Verschiebbarkeit der Sitzflächenbaugruppe gegenüber der Sitzbasis in mindestens eine translatorische Richtung, eine zusätzliche Verschiebung der Sitzflächenbaugruppe parallel zu einer Querachse oder die Einstellung des Winkels einer Lehnenbaugruppe zu der Sitzbaugruppe sein. Die Blockierung oder auch Festlegung von beweglichen Teilen des Flugzeugsitzes in einer definierten Standardstellung für kritische Flugphasen ermöglicht eine definierte Auslegung des Flugzeugsitzes und begünstigt hierdurch die Sicherheit eines Sitzenden in einem Crashfall.

Die Sitzflächenbaugruppe kann gegenüber der Sitzbasis in einer Richtung translatorisch verschiebbar und in wenigstens einer Stellung blockierbar sein. Vorzugsweise ist eine Kraftbegrenzungseinrichtung vorgesehen, welche bei einer Aktivierung die translatorische Relativbewegung zwischen der Sitzbasis und der blockierten Sitzflächenbaugruppe ermöglicht.

Die Kraftbegrenzungseinrichtung mit einer Relativbewegung zwischen Sitzbasis und Sitzflächenbaugruppe ermöglicht den Abbau kinetischer Energie eines Passagiers auf dem Sitz in einem Crashfall, wobei der Abbau im Wesentlichen nicht durch eine Verformung der tragenden Struktur im Bereich des Sitzunterbaus erfolgt. Der Energieabbau erfolgt in der Kraftbegrenzungseinrichtung und kann gerichtet in Lastrichtung erfolgen, ohne dass eine Rotationsbewegung um einen Drehpunkt im Bodenbereich des Flugzeugsitzes eingeleitet wird. Die Kraftbegrenzungseinrichtung reduziert die Belastungen für einen Passagier, so dass Verletzungen vermieden werden können. Weiterhin wirkt sich die Kraftbegrenzungseinrichtung positiv auf die Struktur des Flugzeugsitzes aus, da dieser ebenfalls durch die Kraftbegrenzungseinrichtung nur mit begrenzten und dadurch definierten Kräften belastet wird, so dass ein Strukturversagen durch Lastspitzen verhindert werden kann. Die strukturelle Auslegung des Sitzunterbaus kann so gezielt auf die durch die Kraftbegrenzungseinrichtung begrenzten Kraftwerte ausgelegt werden, was eine leichte Bauweise ermöglicht.

Vorzugsweise ist die Kraftbegrenzungseinrichtung zwischen der Sitzbasis und der Sitzflächenbaugruppe angeordnet. Hierdurch kann eine Kraftübertragung mit kurzen Lastpfaden und kurzen resultierenden Hebeln erreicht werden. Zudem sind die entsprechenden Lastpfade von der Sitzflächenbaugruppe, der Rückenlehne und/oder den Anschlagspunkten eines Sicherheitsgurtes in diesem Fall in vorteilhafter Weise kurz, was für eine leichte Bauweise vorteilhaft sein kann.

Vorzugsweise ist die Sitzflächenbaugruppe gegenüber der Sitzbasis in einer definierten Standardstellung blockierbar. Eine definierte Standardstellung des Flugzeugsitzes, die vorzugsweise von außen durch eine Person auch durch geeignete Mittel als solche erkannt werden kann, ist vorteilhaft für eine definierte und optimierte Auslegung des Flugzeugsitzes für einen Crashfall, wodurch die Sicherheit erhöht und der Zulassungsaufwand reduziert werden kann. Die definierte Standardstellung wird durch entsprechende Vorschriften und Handlungsanweisungen in kritischen Flugphasen, wie beispielsweise Start, Landung oder Rollen, eingenommen. Sie kann beispielsweise durch Rasten unterstützt werden, wodurch Abweichungen von der Standardstellung durch Nachlässigkeiten der Passagiere beim Einnehmen einer Stellung verhindert werden. Sie unterscheidet sich von einer üblicherweise einzunehmenden aufrechten Sitzposition durch eine verminderte Toleranz gegenüber Abweichungen.

Die Erfindung wird im Folgenden anhand bevorzugter Ausführungsformen unter Bezugnahme auf die beigefügten Figuren erläutert. Dabei zeigt:
- Fig. 1: einen Flugzeugsitz mit Sitzbaugruppe;
- Fig. 2: eine Schnittdarstellung eines Flugzeugsitzes;
- Fig. 3: Flugzeugsitze aus dem Stand der Technik;
- Fig. 4: Flugzeugsitze mit Kraftbegrenzungseinrichtung;
- Fig. 5: Flugzeugsitz mit Kraftbegrenzungsvorrichtung; und
- Fig. 6: Flugzeugsitz mit Kraftbegrenzungsvorrichtung.

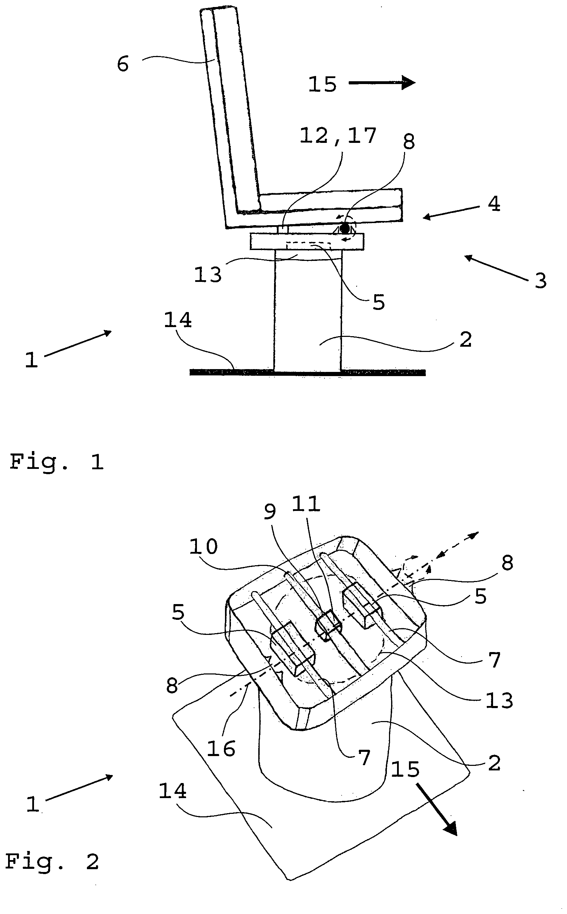

Fig. 1 zeigt ein vorteilhaftes Ausführungsbeispiel eines Flugzeugsitzes 1 mit einem Sitzunterbau 2, auf dem eine Sitzbaugruppe 3 angeordnet ist. Die Sitzbaugruppe 3 umfasst eine Sitzbasis 5, die fest mit dem Sitzunterbau 2 verbunden werden kann und in Fig. 2 zu erkennen ist sowie eine Sitzflächenbaugruppe 4. An der Sitzflächenbaugruppe 4 ist eine Lehnenbaugruppe 6 angeordnet.

Der Winkel zwischen der Lehnenbaugruppe 6 und der Sitzflächenbaugruppe 4 ist vorteilhafterweise verstellbar. Der verstellbare Winkel erlaubt verschiedene fixierte Sitzwinkel zwischen Rückenlehne und Sitzfläche, was unterschiedliche Sitzpositionen ermöglicht. Weiterhin können in alternativen Ausführungsbeispielen Armlehnen und/oder Fußstützen an der Sitzflächenbaugruppe angeordnet sein.

Der Sitzunterbau 2 ist mit der Bodenstruktur des Flugzeugs verbindbar, und ist daher in einem eingebauten Zustand des Flugzeugsitzes flugzeugfest.

Die Sitzflächenbaugruppe 4 kann gegenüber der Sitzbasis 5, die in diesem Ausführungsbeispiel auf einem feststellbaren Drehteller 13 angeordnet ist, translatorisch in Blickrichtung 15 und/oder entgegen der Blickrichtung 15 eines Sitzenden verschoben werden. Die Verschiebbarkeit ist in einem Normalzustand gebremst, wobei die Bremse durch einen Bediener bzw. einen Sitzenden gelöst werden kann, um den Flugzeugsitz 1 z.B. an einen möglichen Tisch, in den Figuren nicht dargestellt, heranzubewegen. Die Betriebsbremsen, die die translatorische Verschiebbarkeit unter normalen Betriebslasten bremsen und auf diese Weise auch blockieren können, rutschen in einem Crashfall typischerweise aufgrund der hohen Belastung durch. Sie können aber auch kinetische Energie abbauen.

Weiterhin weist der Flugzeugsitz 1 in diesem Ausführungsbeispiel in der Sitzflächenbaugruppe 4 ein Wippengelenk 8 auf, wodurch der obere Teil der Sitzflächenbaugruppe 4 gegenüber der Sitzbasis 5, dem Sitzunterbau 2 und/oder dem Kabinenboden 14 wippbar ist, so dass für dieses Teil eine begrenzte, vorzugsweise federbelastete Rotation um eine Querachse 16 durch das Wippengelenk 8 möglich ist.

Die Wippbarkeit des Flugzeugsitzes 1 kann in mindestens einer Stellung blockiert werden, so dass für kritische Flugphasen, wie z.B. Start oder Landung, eine definierte Standardstellung durch geeignete Vorgehensweisen eingenommen werden kann oder muss. Die Blockierung wird in diesem Ausführungsbeispiel durch ein Blockadeelement 12 bewirkt werden. Das Blockadeelement 12 ist vorzugsweise ein Teil der Kraftbegrenzungsvorrichtung 17. Die Kraftbegrenzungsvorrichtung 17 sowie die Kraftbegrenzungseinrichtung 9 können in einem möglichen Ausführungsbeispiel einen Topf mit einer Materialfüllung aufweisen, wobei ein Stempel vorgesehen ist, welcher bei einer kraftbegrenzten Bewegung in einem Crashfall in den Topf gedrückt wird. Die Materialfüllung wird hierbei über einen Deformationsweg unter Energieaufnahme komprimiert. Die Materialfüllung kann beispielsweise ein Schaum, insbesondere ein metallischer Schaum, oder eine metallische Wabenstruktur umfassen. Vorzugsweise steigt die Dichte der Materialfüllung zum Topfboden hin in mindestens zwei Schichten an.

In einem bevorzugten Ausführungsbeispiel ist die Wippbewegung der Sitzfläche des Flugzeugsitzes 1 auf 8° nach hinten und 2° nach vorne begrenzt. Weiterhin kann ein typischer Anstellwinkel eines Flugzeugs, in dem der Flugzeugsitz 1 verwendet wird, von 2° durch das Wippengelenk 8 kompensiert werden. Das Wippengelenk 8 kann daher in Abhängigkeit von der Sitzausrichtung, d.h. mit Blickrichtung 15 in oder entgegen der Flugrichtung, die Sitzfläche des Flugzeugsitzes 1 im Reiseflug senkrecht zur Erdanziehungskraft ausrichten. Der Flugzeugsitz 1 kann daher soweit nach vorne kippen, so dass die Sitzfläche nach vorne hin abfällt, was ein einfaches Aufstehen aus dem Flugzeugsitz 1 ermöglichen kann. Dies wird weiterhin durch die vorteilhafte Anordnung des Wippengelenks 8 im vorderen Bereich der Sitzfläche unterstützt. In diesem vorteilhaften Ausführungsbeispiel ist die Wippbewegung federbelastet.

Die Wippbewegung oder auch Freiheit des Wippengelenks 8 kann in diesem vorteilhaften Ausführungsbeispiel durch einen Bediener blockiert werden, so dass eine feststehende Sitzposition des Flugzeugsitzes 1 in kritischen Flugphasen, wie Start, Landung oder Rollen, erreicht werden kann. Weiterhin ist ein Blockieren der Wippbewegung mit einem Blockadeelement 12 bei einer sehr flachen Sitzeinstellung mit großem Winkel zwischen Lehnenbaugruppe 6 und Sitzfläche vorteilhaft, um den Flugzeugsitz 1 in einer Liegeposition fixieren zu können, da in diesem Anwendungsfall eine Wippbarkeit unerwünscht ist.

In Fig. 2 ist der untere Teil einer Sitzbaugruppe 3 dargestellt. Die Sitzbasis 5 der Sitzbaugruppe 3 bilden in diesem Ausführungsbeispiel zwei Führungselemente, die im montierten Zustand mit dem Sitzunterbau 2 verbunden sind. Die Verbindung zwischen dem Sitzunterbau 2 und der Sitzbasis 5 kann über einen Drehteller 13 erfolgen. Hierdurch kann die Sitzbaugruppe 3 gegenüber dem Kabinenboden 14 gedreht werden, wodurch sich die Nutzbarkeit und Flexibilität des Flugzeugsitzes verbessert. Die Führungselemente sind als Sitzbasis 5 in diesem Ausführungsbeispiel auf dem Drehteller 13 angeordnet und weisen eine Betriebsbremse auf, mit der die translatorische Verschiebbarkeit blockiert werden kann.

Die Sitzbaugruppe 3 weist vorteilhafterweise zwei Führungsstangen 7 auf, die von den Führungselementen der Sitzbasis 5 umschlossen werden und eine geführte Relativbewegung zwischen Sitzbasis 5 und Sitzflächenbaugruppe 4 ermöglichen, so dass die Sitzflächenbaugruppe 4 in einer Richtung, die auch die Gegenrichtung umfassen kann, translatorisch verschiebbar ist. Die Verschiebbarkeit ist in einem vorteilhaften Ausführungsbeispiel grundsätzlich gebremst, so dass sich eine widerstandslose translatorische Verschiebbarkeit erst beim manuellen Lösen der Bremse durch den Passagier ergibt. In einer Stellung kann die translatorische Verschiebbarkeit gebremst und zusätzlich blockiert werden. Für die Blockierung greift eine Kraftbegrenzungseinrichtung 9 in den kinematischen Aufbau ein, was die Bewegung der Sitzflächenbaugruppe 4 unter normalen Betriebslasten blockiert. Die Kraftbegrenzungseinrichtung 9 kann hierfür mit der Sitzbasis 5 verbunden oder ein Teil dieser sein.

Zwischen den Führungsschienen 7 ist in diesem Ausführungsbeispiel die Kraftbegrenzungseinrichtung 9 mittig in der Sitzbaugruppe angeordnet. Die Kraftbegrenzungseinrichtung 9 besteht in vorteilhafter Weise aus einem stabförmigen Faserverbundbauteil 10, das parallel zu den Führungsschienen 7 angeordnet ist, sowie einem formstabilen Bauteil 11, welches eine Anbindung an die Sitzbasis 5 bzw. an den Sitzunterbau 2 oder den Drehteller 13 aufweist. In einer vorteilhaften Ausführungsform greift das formstabile Bauteil 11 nur in einer für kritische Flugphasen vorgesehenen Stellung des Flugzeugsitzes 1 in das stabförmige Faserverbundbauteil 10 ein.

Die Kraftbegrenzungseinrichtung 9 ermöglicht bei einer Aktivierung, d.h. bei Überschreiten einer Kraftgrenze, eine Relativbewegung zwischen Sitzbasis 5 und Sitzflächenbaugruppe 4. Die Relativbewegung ist kraftbegrenzt und ermöglicht im Crashfall die Aufnahme kinetischer Energie, so dass die auf den Passagier einwirkenden Kräfte im Crashfall begrenzt sind, was Verletzungen durch die im Crashfall auftretenden hohen Beschleunigungen verhindern kann. Weiterhin kann die Kraftbegrenzungseinrichtung 9 dazu eingesetzt werden, Schocklasten zu reduzieren.

Im Fall einer Aktivierung der Kraftbegrenzungseinrichtung 9 wird in diesem Ausführungsbeispiel das formstabile Bauteil 11 energieverzehrend gegenüber dem stabförmigen Faserverbundbauteil 10 verschoben. Das Faserverbundbauteil 10 wird dabei unter Energieaufnahme zerstört, z.B. durch Zerdrücken oder Zerfasern. Die Richtung der Relativbewegung ergibt sich aus der einwirkenden Beschleunigung, wobei die Relativbewegung durch die Führungsschienen 7 geführt wird.

Die Verwendung einer Kraftbegrenzungseinrichtung zur Energieaufnahme ermöglicht die Trennung der Energie absorbierenden Bewegung im Crashfall von der mechanischen Struktur des Flugzeugsitzes. Bisher wurde die Energie üblicherweise durch plastische Verformung des Sitzgestells selbst abgebaut. Da diese plastische Verformbarkeit nicht mehr notwendig ist, ermöglicht es den Einsatz von Faserverbundmaterialien in der mechanischen Struktur des Flugzeugsitzes, so dass sehr leichte Strukturen mit hoher Festigkeit und Steifigkeit und/oder mit geringen Abmaßen hergestellt werden können. Insgesamt kann sich hieraus neben einem leichteren Flugzeugsitz eine hohe Designvariabilität ergeben.

In einem alternativen Ausführungsbeispiel weist die Kraftbegrenzungseinrichtung 9 eine metallische Struktur oder einen metallischen Schaum auf, die bei einer Aktivierung unter Energieaufnahme plastisch verformt werden.

Weiterhin kann durch die funktionale Trennung von Energieaufnahme bei einer Relativbewegung und Lastübernahme eine sehr genaue Abstimmung der auf den Passagier einwirkenden Lasten erfolgen, was im Stand der Technik durch den notwendigen Kompromiss der Abstimmung von Steifigkeit und Nachgiebigkeit der mechanischen Struktur in dieser Form nicht möglich war.

Die Sitzflächenbaugruppe 4 ist in einer vorteilhaften Ausführungsform quer zur Blickrichtung 15 eines Sitzenden bzw. parallel zu einer Querachse 16 durch den Passagier verschiebbar, so dass für den Passagier diesbezüglich eine seitliche Einstellmöglichkeit vorhanden ist. Dies kann vorteilhaft durch eine Funktionsintegration mit dem Wippengelenk 8 erfolgen.

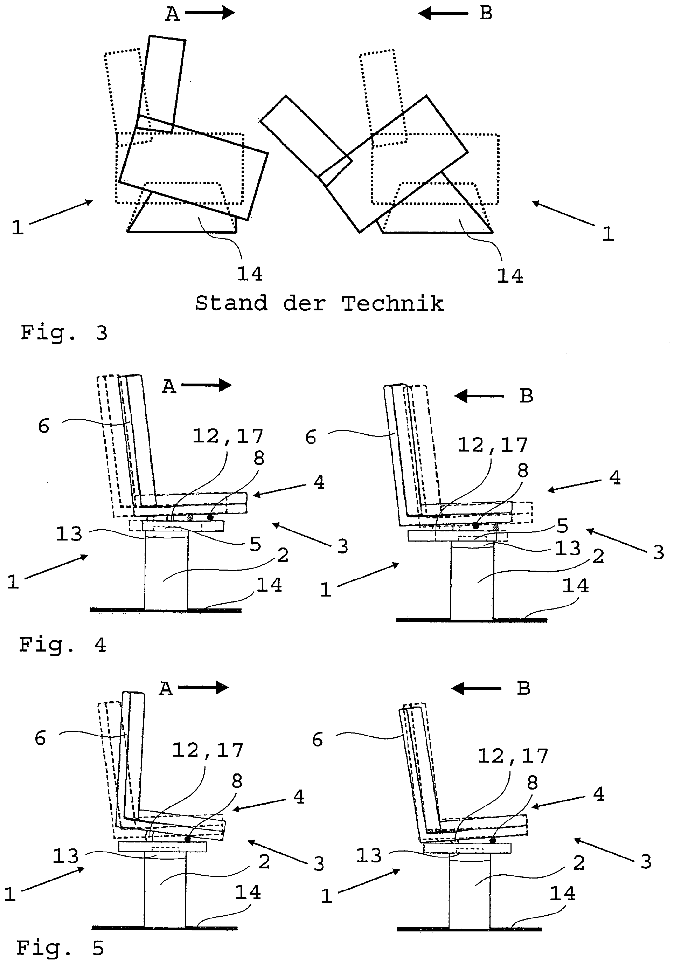

In Fig. 3 ist ein Flugzeugsitz 1 aus dem Stand der Technik mit einem Gestell 14 dargestellt. Die gepunktete Darstellung zeigt den Flugzeugsitz 1 aus dem Stand der Technik in einer aufrechten Sitzposition in einer kritischen Flugphase vor einem Crashfall. Weiterhin ist der Flugzeugsitz 1 aus dem Stand der Technik mit seinem Verformungsverhalten nach zwei möglichen Crashfällen mit unterschiedlichen Beschleunigungsrichtungen A, B des Masseschwerpunkts eines sitzenden Passagiers, in Fig. 3 nicht gezeigt, dargestellt.

Das Gestell 14 ist für die Aufnahme der Belastungen im Crashfall mit hohen Beschleunigungen plastisch verformbar gestaltet. Die Begrenzung der auf einen sitzenden Passagier einwirkenden Kräfte wird durch die nachgiebige Struktur des Gestells 14 erreicht. Insgesamt stellt sich im unteren Bereich des Flugzeugsitzes 1 eine vergleichsweise große Deformation ein, die zu einer Drehung des Flugzeugsitzes 1 führt, wobei der Drehpunkt bezogen auf die Sitzfläche des Flugzeugsitzes 1 tief liegt, was zu großen Auslenkungen im oberen Bereich des Flugzeugsitzes 1 führt.

Die Auslenkung im Crashfall definiert die Bewegungsenveloppe des Flugzeugsitzes 1 und des sitzenden Passagiers, die von Gegenständen und/oder Objekten in der Kabine des Flugzeugs freigehalten werden muss. Nach dem Stand der Technik ergibt sich eine entsprechend große Bewegungsenveloppe. Eine steifere Ausführung des Gestells 14 ist nach dem Stand der Technik durch die notwendige Lastbegrenzung für den Passagier durch Aufnahme kinetischer Energie im Crashfall nicht möglich.

In Fig. 4 sind zwei Flugzeugsitze 1 dargestellt, die die gleichen Beschleunigungen in den Richtungen A, B aus beiden Crashfällen erfahren wie die Flugzeugsitze 1 aus dem Stand der Technik in Fig. 3. Die Kraftbegrenzungseinrichtung 9 ermöglicht zusammen mit den Führungsschienen 7, die durch Teile der Sitzbasis 5 verlaufen, in einem Crashfall eine geführte und kraftbegrenzte Relativbewegung. Dies führt in einem Crashfall mit translatorischen Lasten zu einer begrenzten Belastung des Passagiers auf dem Flugzeugsitz 1 sowie zu einer kleinen Bewegungsenveloppe. Weiterhin ergibt sich durch die Kraftbegrenzung durch die hierfür vorgesehene Kraftbegrenzungseinrichtung 9 eine geringere Strukturbelastung des Flugzeugsitzes 1 im Crashfall, wodurch der Flugzeugsitz 1 ein geringeres Strukturgewicht aufweisen kann. Zudem wird die Verwendung von leichten und steifen Materialien mit geringem Verformungspotential, wie beispielsweise kohlenstofffaserverstärkten Kunststoffen, ermöglicht, was ebenfalls zu einem leichteren Flugzeugsitz 1 führen kann. Die Flugzeugsitze 1 befinden sich vorteilhafterweise vor dem Crashfall in einer definierten Standardstellung, die in der Fig. 4 und der Fig. 5 jeweils gestrichelt dargestellt sind. Die definierte Standardstellung kann in einem möglichen Ausführungsbeispiel durch eine manuelle Verriegelung alternativ oder zusätzlich festgelegt werden. In der definierten Standardstellung sind vorteilhafterweise jegliche Bewegungen von Teilen des Flugzeugsitzes 1 aus den üblichen Betriebslasten unterbunden. Die in einem Crashfall zu erwartenden Crashlasten übersteigen die Betriebslasten deutlich.

Fig. 5 zeigt den Flugzeugsitz 1 in zwei möglichen translatorischen Lastfällen in den Richtungen A und B, wobei der Flugzeugsitz 1 eine Wippbarkeit durch ein Wippengelenk 8 aufweist, die vor dem Eintreten des Crashfalls durch das Blockadeelement 12 blockiert ist. Die Kraftbegrenzungseinrichtung ist in diesem vorteilhaften Ausführungsbeispiel ein Teil des Blockadeelements 12, das durch die Lasten eines Crashfalls in den Richtungen A und B aktiviert wurde. Die Aktivierung der Kraftbegrenzungsvorrichtung 17 ermöglicht eine kraftbegrenzte Wippbewegung aus der Stellung oder auch Position des Flugzeugsitzes 1 für kritische Flugphasen, in Fig. 3, Fig. 4 und Fig. 5 gestrichelt dargestellt. Durch die kraftbegrenzte Bewegung kann kinetische Energie abgebaut werden und dadurch die auftretende Belastung für den Passagier begrenzt werden. Weiterhin erfolgt die kraftbegrenzte Bewegung vorteilhafterweise um die Querachse 16, in welcher das Wippengelenk 8 angeordnet ist, so dass sich eine geführte und kraftbegrenzte Bewegung in einem Crashfall einstellt. Die sich ergebende Bewegungsenveloppe ist dementsprechend vordefiniert und kann vergleichsweise klein gehalten werden.

Die kraftbegrenzte translatorische Verschiebung und die kraftbegrenzte rotatorische Wippbewegung können in einem möglichen Ausführungsbeispiel eines Flugzeugsitzes 1 auch kombiniert genutzt werden.

Durch die Kraftbegrenzungseinrichtung 9 und die Kraftbegrenzungsvorrichtung 17 kann auf dicke Polstermassen zur Reduzierung von auf den Passagier einwirkenden Kräften verzichtet werden, so dass Bauraum und Gewicht des Flugzeugsitzes 1 eingespart werden können. Weiterhin ergeben sich bezüglich der Polsterung vielfältigere Gestaltungsmöglichkeiten, da die Relevanz der Polsterung des Flugzeugsitzes 1 für das Crashverhalten reduziert werden kann.

Die Aufnahme der kinetischen Energie in den genannten vorteilhaften Ausführungsbeispielen erfolgt vorteilhafterweise in einem Abstand größer als 30 cm über dem Kabinenboden 14.

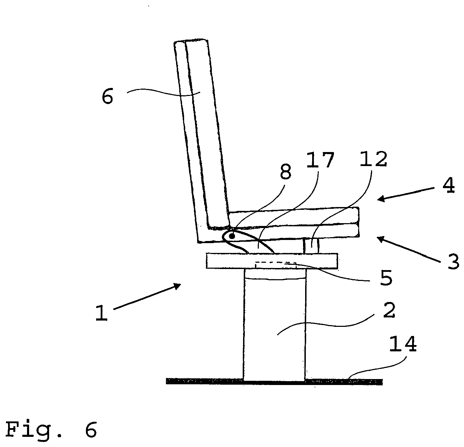

In Fig. 6 ist ein mögliches Ausführungsbeispiel eines Flugzeugsitzes 1 dargestellt, in welchem die Kraftbegrenzungsvorrichtung 17 eine metallische Struktur ist. Die metallische Struktur ist auf beiden Seiten der Sitzbasis 5 angeordnet und vorzugsweise fest mit der Sitzbasis 5 verbunden oder integral mit der Sitzbasis 5 verbunden. Die Kraftbegrenzungsvorrichtung 17 weist an dem Wippengelenk 8 eine mechanische Verbindung zur Sitzflächenbaugruppe 4 auf. In einer alternativen Ausführung eines Flugzeugsitzes, welche nicht unter die Definition von Anspruch 1 fällt, kann auf das Wippengelenk 8 verzichtet werden, da die Wippbewegung um eine Querachse 16 in diesem Ausführungsbeispiel auch durch die Verformung der bananenförmigen Kraftbegrenzungsvorrichtung 17 ermöglicht werden kann. Daher sind in diesem Ausführungsbeispiel auch zwei Wippbewegungen um unterschiedliche Querachsen 16 möglich. Die Wippbarkeit zur Einstellung des Flugzeugsitzes 1 durch einen Passagier kann durch das Wippengelenk 8 realisiert werden, wobei diese Art Wippbarkeit beim Eintritt in kritische Flugphasen blockiert wird. In einem solchen blockierten Zustand kann die Wippbarkeit zur Energieaufnahme und zur Begrenzung der Auswirkungen auf den Passagier in einem Crashfall durch eine Verformung der Kraftbegrenzungsvorrichtung 17 dennoch erreicht werden, sofern die auftretenden Kräfte eine kontinuierliche kraftbegrenzte Bewegung und Energieaufnahme der Kraftbegrenzungsvorrichtung 17 ermöglichen, d.h. ein entsprechend hohes Niveau erreichen.

Die Kraftbegrenzungsvorrichtung 17 ermöglicht somit die Aufnahme von kinetischer Energie bei einer Rotationsbewegung bzw. Wippbewegung der Sitzflächenbaugruppe 4 gegenüber der Sitzbasis 5, wobei keine Rotationsbewegung des Flugzeugsitzes um einen Drehpunkt im Bodenbereich eingeleitet wird.

## Patentansprüche

1. Flugzeugsitz (1) mit einer Sitzbaugruppe (3), wobei
- die Sitzbaugruppe (3) einen Sitzunterbau (2), eine Sitzbasis (5) und eine Sitzflächenbaugruppe (4) umfasst, wobei
- der Flugzeugsitz (1) eine Wippbarkeit zwischen der Sitzbasis (5) und/oder dem Sitzunterbau (2) und wenigstens Teilen der Sitzflächenbaugruppe (4) um eine Querachse (16) aufweist, wobei
- der obere Teil der Sitzflächenbaugruppe (4) gegenüber dem Sitzunterbau (2) und/oder der Sitzbasis (5) durch ein Wippengelenk (8) wippbar ist, und
- eine Kraftbegrenzungsvorrichtung (17) vorgesehen ist, welche bei einer Aktivierung durch ein Überschreiten einer Kraftgrenze eine kraftbegrenzte Wippbewegung der Sitzflächenbaugruppe (4) ermöglicht, wobei
- die Wippbarkeit der Sitzflächenbaugruppe (4) durch ein Blockadeelement (12) blockiert werden kann, **dadurch gekennzeichnet, dass**
- in diesem blockierten Zustand die kraftbegrenzte Wippbewegung unter dauerhafter Energieaufnahme der Kraftbegrenzungsvorrichtung (17) erfolgt.

2. Flugzeugsitz (1) nach Anspruch 1, **dadurch gekennzeichnet, dass** das Blockadeelement (12) Teil der Kraftbegrenzungsvorrichtung (17) ist.

3. Flugzeugsitz (1) nach einem der Ansprüche 1 oder 2, **dadurch gekennzeichnet, dass** die Sitzflächenbaugruppe (4) gegenüber der Sitzbasis (5) eine Verschiebbarkeit in mindestens eine translatorische Richtung im Wesentlichen parallel zu einem Kabinenboden (14) aufweist.

4. Flugzeugsitz (1) nach Anspruch 3, **dadurch gekennzeichnet, dass** die Sitzbaugruppe (3) ein Wippengelenk (8) für eine Wippbarkeit der Sitzflächenbaugruppe (4) umfasst, wobei das Wippengelenk (8) eine zusätzliche Verschiebung der Sitzflächenbaugruppe (4) parallel zu einer Querachse (16) ermöglicht.

5. Flugzeugsitz (1) nach einem der vorangehenden Ansprüche, **dadurch gekennzeichnet, dass** an der Sitzbaugruppe (3) eine einstellbare Lehnenbaugruppe (6) angeordnet ist.

6. Flugzeugsitz (1) nach einem der vorangehenden Ansprüche, **dadurch gekennzeichnet, dass** die Relativbewegung von Teilen des Flugzeugsitzes (1) in einer definierten Standardstellung blockierbar ist.

7. Flugzeugsitz (1) nach einem der vorangehenden Ansprüche, **dadurch gekennzeichnet, dass** die Kraftbegrenzungsvorrichtung (17) zwischen der Sitzbasis (5) oder dem Sitzunterbau (2) und der Sitzflächenbaugruppe (4) angeordnet ist.

8. Flugzeugsitz (1) nach einem der vorangehenden Ansprüche, **dadurch gekennzeichnet, dass** die Sitzflächenbaugruppe (4) gegenüber der Sitzbasis (5) in einer definierten Standardstellung blockierbar ist.

## Claims

1. Aircraft seat (1) having a seat assembly (3), wherein
- the seat assembly (3) comprising a seat substructure (2), a seat base (5) and a seat surface assembly (4), wherein
- the aircraft seat (1) has a rocking capability between the seat base (5) and/or the seat substructure (2) and at least parts of the seat surface assembly (4) about a transverse axis (16), wherein
- the upper part of the seat surface assembly (4) is rockable relative to the seat substructure (2) and/or the seat base (5) by a rocker joint (8), and
- a force-limiting device (17) is provided which, when activated by exceeding a force limit, enables a force-limited rocking movement of the seat surface assembly (4),
wherein
- the rocking of the seat surface assembly (4) can be blocked by a blocking element (12), **characterized in that**
- in this blocked state, the force-limited rocking movement takes place under permanent energy absorption of the force-limiting device (17).

2. Aircraft seat (1) according to claim 1, **characterized in that** the blocking element (12) is part of the force-limiting device (17).

3. Aircraft seat (1) according to one of claims 1 or 2, **characterized in that** the seat surface assembly (4) has a displaceability with respect to the seat base (5) in at least one translatory direction substantially parallel to a cabin floor (14).

4. Aircraft seat (1) according to claim 3, **characterized in that** the seat assembly (3) comprises a rocker joint (8) for a rockability of the seat surface assembly (4), wherein the rocker joint (8) allows an additional displacement of the seat surface assembly (4) parallel to a transverse axis (16).

5. Aircraft seat (1) according to any one of the preceding claims, **characterized in that** an adjustable backrest assembly (6) is arranged on the seat assembly (3).

6. Aircraft seat (1) according to any one of the preceding claims, **characterized in that** the relative movement of parts of the aircraft seat (1) can be locked in a defined standard position.

7. Aircraft seat (1) according to any one of the preceding claims, **characterized in that** the force-limiting device (17) is arranged between the seat base (5) or the seat substructure (2) and the seat surface assembly (4).

8. Aircraft seat (1) according to any one of the preceding claims, **characterized in that** the seat surface assembly (4) is blockable in a defined standard position relative to the seat base (5).

## Revendications

1. Siège d'avion (1) pourvu d'un ensemble siège (3), dans lequel
- l'ensemble siège (3) comprend un soubassement de siège (2), une base de siège (5) et un ensemble assise (4), dans lequel
- le siège d'avion (1) présente une capacité de basculement entre la base de siège (5) et/ou le soubassement de siège (2) et au moins des parties de l'ensemble assise (4) autour d'un axe transversal (16), dans lequel
- la partie supérieure de l'ensemble assise (4) peut basculer par rapport au soubassement de siège (2) et/ou à la base de siège (5) par le biais d'une articulation de basculement (8), et
- un dispositif de limitation de force (17) est prévu, qui permet, lors d'une activation par un dépassement d'une limite de force, un mouvement basculant limité en force de l'ensemble assise (4), dans lequel
- la capacité de basculement de l'ensemble assise (4) peut être bloquée par un élément de blocage (12), **caractérisé en ce que**
- dans cet état bloqué, le mouvement de basculement limité en force est effectué avec absorption d'énergie continue du dispositif de limitation de force (17).

2. Siège d'avion (1) selon la revendication 1, **caractérisé en ce que** l'élément de blocage (12) fait partie du dispositif de limitation de force (17).

3. Siège d'avion (1) selon l'une des revendications 1 ou 2, **caractérisé en ce que** l'ensemble assise (4) présente une capacité de déplacement par rapport à la base de siège (5) dans au moins une direction de translation sensiblement parallèle à un plancher de cabine (14).

4. Siège d'avion (1) selon la revendication 3, **caractérisé en ce que** l'ensemble siège (3) comprend une articulation de basculement (8) pour une capacité de basculement de l'ensemble assise (4), l'articulation de basculement (8) permettant un déplacement supplémentaire de l'ensemble assise (4) parallèlement à un axe transversal (16).

5. Siège d'avion (1) selon l'une des revendications précédentes, **caractérisé en ce qu'**un ensemble dossier (6) réglable est disposé sur l'ensemble siège (3).

6. Siège d'avion (1) selon l'une des revendications précédentes, **caractérisé en ce que** le mouvement relatif de parties du siège d'avion (1) peut être bloqué dans une position standard définie.

7. Siège d'avion (1) selon l'une des revendications précédentes, **caractérisé en ce que** le dispositif de limitation de force (17) est disposé entre la base de siège (5) ou le soubassement de siège (2) et l'ensemble assise (4).

8. Siège d'avion (1) selon l'une des revendications précédentes, **caractérisé en ce que** l'ensemble assise (4) peut être bloqué par rapport à la base de siège (5) dans une position standard définie.
